# EUROPEAN PATENT SPECIFICATION

(11) **EP 2 211 266 B1**
(45) Date of publication and mention of the grant of the patent: **05.06.2019**
(21) Application number: 08852076.2
(22) Date of filing: 16.10.2008
(51) Int. Cl.: G06F 8/60, G06F 8/61

(54) **SOFTWARE DOWNLOAD METHOD AND TELECOMMUNICATION EQUIPMENT**
SOFTWAREDOWNLOADVERFAHREN UND TELEKOMMUNIKATIONSAUSRÜSTUNG
PROCÉDÉ DE TÉLÉCHARGEMENT DE LOGICIEL ET DISPOSITIF DE TÉLÉCOMMUNICATION

(30) Priority: 30.10.2007 CN 200710047748
(43) Date of publication of application: 28.07.2010
(73) Proprietor: Huawei Technologies Co., Ltd., Longgang District Shenzhen, Guangdong 518129 (CN)
(72) Inventor: WANG, Hailong, Guangdong Province 518129 (CN); DAI, Yuhong, Guangdong Province 518129 (CN); ZHANG, Jian, Guangdong Province 518129 (CN)
(74) Representative: Pfenning, Meinig & Partner mbB
(86) International application number: PCT/CN2008/072722
(87) International publication number: WO 2009/065330

(56) References cited:
- CN-A- 1 725 200
- CN-A- 1 777 873
- CN-A- 101 042 651
- CN-A- 101 158 905
- JP-A- 2005 103 992
- US-A1- 2004 001 088

## Description

### FIELD OF THE INVENTION

The present invention relates to the telecommunication field, and more specifically, to a method for downloading software and telecommunication apparatus thereof.

### BACKGROUND

Rapid development of telecommunication service has accelerated the software upgrade frequency for the telecommunication apparatus and thus results in frequent software upgrade operations.

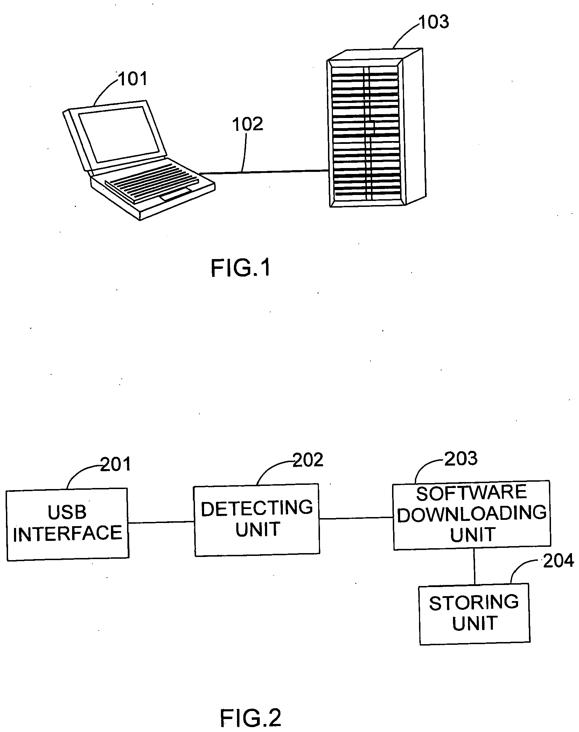

The key operation for software upgrade is to download the software to the telecommunication apparatus. FIG. 1 illustrates a networking diagram for existing software download. A portable device 101 connects directly to an Ethernet interface of a telecommunication apparatus 103 via a network cable 102. Then, the software on the portable device 101 is downloaded to the telecommunication apparatus 103 by means of File Transfer Protocol (FTP) and the like.

During researching and practicing of conventional art, it is discovered that the conventional art encounters the following problems.

According to conventional art, manual networking, IP address configuration, FTP option configuration are required during the process of downloading software. In addition, the software on the portable device has to be downloaded manually to the telecommunication apparatus. Therefore, the existing process of downloading software is complicated and the requirement for technicians is high. Moreover, the portable device is required when the software is downloaded, thereby increasing the costs.

Document US 2004/001088 A1 discloses a solution for uploading the computing environment data from the portable personal configuration device to a new computer. The user can mate the portable personal configuration device with such other computer and cause the computing environment data to be uploaded into the new computer. Uploading can be initiated either automatically upon insertion of the device into the new computer or by the user pressing an upload button on the device itself.

### SUMMARY

A technical problem to be solved is to provide a method for downloading software and a telecommunication apparatus thereof to enable the telecommunication apparatus to download the software automatically.

To solve the foregoing problem, technical solutions according to the present invention are presented below.

A telecommunication apparatus includes a universal serial bus interface, a detecting unit, a software downloading unit, a storing unit a key acquiring unit and a key parsing unit.

The detecting unit is configured to detect, via a preset universal serial bus driver, whether there is a storage apparatus connecting to the universal serial bus interface.

The software downloading unit is configured to acquire from the storage apparatus software that corresponds to a preset software list if the detecting unit detects the storage apparatus connecting to the universal serial bus interface, and configured to write the software into the storing unit.

The software list is preset in a configuration file, wherein the telecommunication apparatus further comprises a configuration file downloading unit (303) and a configuration file parsing unit.

The configuration file downloading unit is configured to acquire the configuration file from the storage apparatus detected by the detecting unit.

The configuration file parsing unit is configured to acquire the preset software list from the configuration file.

The key acquiring unit is configured to acquire a key file from the storage apparatus detected by the detecting unit.

The key parsing unit is configured to parse the key file and trigger the configuration file downloading unit or the software downloading unit if the parsed key file conforms with a preset key rule.

A method for downloading software includes:
detecting, via a preset universal serial bus driver, whether there is a storage apparatus connecting to a universal serial bus interface of a telecommunication apparatus; and
acquiring, from the storage apparatus by the telecommunication apparatus, a software corresponding to a preset software list, and storing the software
acquiring a key file from the detected storage apparatus.

The software list is preset in a configuration file, wherein after detecting that there is a storage apparatus connecting to the universal serial bus interface of the telecommunication apparatus.The method further comprises acquiring the configuration file from the storage apparatus, acquiring the preset software list from the configuration file, and parsing the key file to determine whether the key file conforms with a preset key rule, acquiring the configuration file or the software if the key file conforms with the preset key rule.

Therefore, the present invention has the below benefits.

In an embodiment of the present invention, because the telecommunication apparatus has a universal serial bus interface and pre-sets a universal serial bus driver, the telecommunication apparatus is able to detect whether there is a storage apparatus connecting to the universal serial bus interface. Moreover, because a list of software to be downloaded is preset, the telecommunication apparatus is able to download the software corresponding to the software list from the storage apparatus without the participance of technicians. The above technical solutions provided by the embodiments of the present invention allow the telecommunication apparatus to download the software automatically. In addition, the process of downloading software is simple and easy to implement.

### BRIEF DESCRIPTION OF THE DRAWINGS

FIG. 1 is a networking diagram for downloading software according to conventional arts;
FIG. 2 is a schematic diagram of a telecommunication apparatus according to a first embodiment of the present invention;
FIG. 3 is a schematic diagram of a telecommunication apparatus according to a second embodiment of the present invention;
FIG. 4 is a schematic flowchart of a method for software upgrade according to a third embodiment of the present invention; and
FIG. 5 is a schematic flowchart of a method for software upgrade according to a fourth embodiment of the present invention.

### DETAILED DESCRIPTION

The purposes, technical solutions and advantages concerning the embodiments of the present invention become more readily appreciated by reference to the following description of the embodiments, when taken in conjunction with the accompanying drawings.

In one embodiment of the present invention, the telecommunication apparatus may be a device required by the telecommunication industry, for instance, a base station, a base station controller, a switch, or a router. A storage apparatus may be a storage device with Universal Serial Bus (USB) Interface, for instance, a flash disc (U disc), or a removable hard disc. The storage apparatus may be used to store software.

When not compromising the implementation of the present invention, the above mentioned interface for the storage apparatus may also include other types of interfaces. It is to be appreciated by those skilled in the art that the above mentioned interface for the storage apparatus may be an interface such as a MultiMedia Card (MMC), a Serial Advanced Technology Attachment (SATA). The USB interface, as an example, shall not be construed as a limitation to the embodiments of the present invention.

FIG. 2 is a schematic diagram of a telecommunication apparatus according to a first embodiment of the present invention. The telecommunication apparatus may include a USB interface 201, a detecting unit 202, a software downloading unit 203 and a storing unit 204.

One end of the USB interface 201 is configured to connect to the USB interface of the storage apparatus. The other end of the USB interface 201 is configured to connect to the detecting unit 202 via a USB interface line.

The detecting unit 202 is configured to detect, via a preset USB driver, whether there is a storage apparatus connecting to the USB interface 201.

The software downloading unit 203 is configured to acquire, from the storage apparatus via the USB interface 201, a software corresponding to a preset software list if the detecting unit 202 detects a storage apparatus connecting to the USB interface 201, and configured to write the software into the storing unit 204 corresponding to a preset storage address.

The storing unit 204 is configured to store the software acquired by the software downloading unit 203.

In one embodiment of the present invention, the software list may refer to the name of the software to be downloaded and/or the name of the folder where the software to be downloaded locates. If the software list refers to the name of the software to be downloaded, the software downloading unit 203 may acquire the software corresponding to the name of the software from the storage apparatus. If the software list refers to the name of the folder where the software to be downloaded locates, the software downloading unit 203 may acquire, one by one, the software in the folder corresponding to the name of the folder. The preset storage address may refer to a storage path indicating the location of the software stored in the telecommunication apparatus.

By way of example, a first embodiment of the present invention is described. Assume the file name of the software to be downloaded is BRDCPUFILE.bin and the name of the folder where the software locates is SOFTWARE.

The storage path and the file name of the software in the telecommunication apparatus are Tffs:BRDCPUFILE.bin. Then, when implementing the first embodiment of the present invention, the functionality of the software downloading unit 203 may be realized as follows.

```
     #define MAX_LEN_OF_READ_FILE (1024*4)
     int DownloadFile( )
     { FILE *pSrcFile,*pDestFile;
          unsigned int ReadLen,WriteLen;
          char *pSrcFileName = "I:\SOFTWARE\BRDCPUFILE.bin";/*storage path for
          the source file and the file name */
          char *pSrcFileName = "I:\SOFTWARE\BRDCPUFILE.bin";/*storage path for
          the destination file and the file name */
          unsigned char TempBuf[MAX_LEN_OF_READ_FILE] = 0;
          pSrcFile= fopen(pSrcFileName,"rb");
     pDestFile= fopen(pDestFileName,"wb");
     ReadLen=fread(TempBuf,
     sizeof((unsigned char), MAX_LEN_OF_READ_FILE, pSrcFile); /* read the source
     file data */
          WriteLen = fwrite(TempBuf,sizeof(unsigned char), ReadLen, pDestFile);
          /* write in the destination file data */
          fclose(pSrcFile);
          fclose(pDestFile); return 1; }
```

According to the above program, in the first embodiment of the present invention, the software list and the storage path for the downloaded software have been pre-written in the program. In other words, the software list and the storage path for the software have been already preset in the program. Therefore, if the telecommunication apparatus according to the first embodiment of the present invention runs the foregoing program, automatic download of the software that is named BRDCPUFILE.bin, can be realized. The example is illustrated only for ease of understanding of the embodiment of the present invention. Such example shall not be construed as a limitation to the embodiment of the present invention.

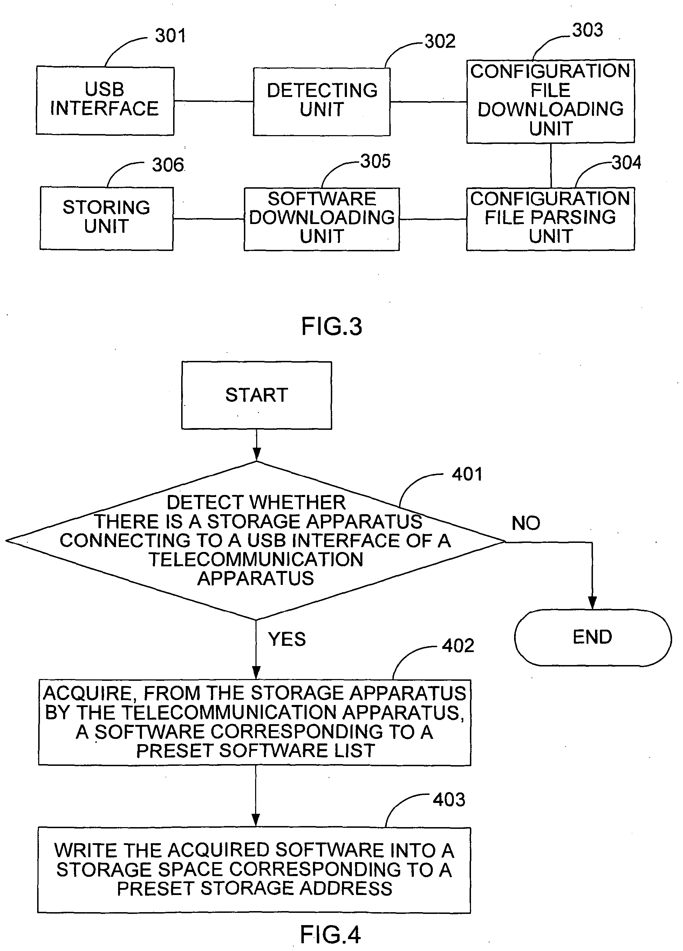

FIG. 3 illustrates a schematic diagram of a telecommunication apparatus according to a second embodiment of the present invention. The telecommunication apparatus may include a USB interface 301, a detecting unit 302, a configuration file downloading unit 303, a configuration file parsing unit 304, a software downloading unit 305, and a storing unit 306.

One end of the USB interface 301 is configured to connect to the USB interface of the storage apparatus. The other end of the USB interface 301 connects to the detecting unit 302 via a USB interface line.

The detecting unit 302 is configured to detect, via a preset USB driver, whether there is a storage apparatus connecting to the USB interface 301.

The configuration file downloading unit 303 is configured to acquire a configuration file from the storage apparatus via the USB interface 301 if the detecting unit 302 detects a storage apparatus connecting to the USB interface.

The configuration file (e.g., cfg.ini) is used to record the software list, the address of the storing unit 306, etc.

The configuration file parsing unit 304 is configured to acquire the software list and the address of the storing unit 306 from the configuration file which is acquired by the configuration downloading unit 303, and send the software list and the address of the storing unit 306 to the software downloading unit 305.

The software downloading unit 305 is configured to acquire, from the storage apparatus via the USB interface 301, a software corresponding to the software list and write the software into the storing unit 306 corresponding to the storage address.

The storing unit 306 is configured to store the software acquired by the software downloading unit 305.

During the implementation of the second embodiment of the present invention, there is no need to write the software list and the address of the storing unit into a download program. Instead, the software list and the address of the storing unit may be pre-recorded in the configuration file which is stored in the storage apparatus. When the detecting unit 302 detects the storage apparatus, the configuration file downloading unit 303 is triggered. Then, the software downloading unit 305 may acquire, based on the software list and the storage address of the storing unit acquired by the configuration file parsing unit 304, the software and save the software in the storing unit 306 corresponding to the storage address.

The preceding apparatuses are the two telecommunication apparatuses provided according to embodiments of the present invention. Because it is possible that the software upgrade may affect the telecommunication service, in order to avoid malicious software download and the misoperation during the process of downloading software and to ensure a safe process of downloading software, a key file may be stored in the storage apparatus, where the key file may represent the identity information of the storage apparatus. Accordingly, the above telecommunication apparatus may further include a key acquiring unit and a key parsing unit.

The key acquiring unit is configured to acquire a key file from the storage apparatus detected by the detecting unit.

In the first embodiment of the present invention, the key parsing unit is configured to parse the key file. If the parsed key file conforms with a preset key rule, it means that the identity information of the storage apparatus is legal and the software downloading unit 203 is triggered. If the parsed key file does not conform with a preset key rule, the software download operation ends.

In the second embodiment of the present invention, the key parsing unit is configured to parse the key file. If the parsed key file conforms with a preset key rule, it means that the identity information of the storage apparatus is legal and the configuration file downloading unit 303 is triggered. If the parsed key file does not conform with a preset key rule, the software download operation ends.

Because the key acquiring unit and the key parsing unit are additionally provided to ensure the safety of the software download process, the configuration file downloading unit may be allowed to acquire the configuration file from the storage apparatus after the detecting unit detects the storage apparatus. And, the configuration file parsing unit may trigger the key acquiring unit to acquire the key file after the configuration file parsing unit acquires the software list and the storage address. The key parsing unit may parse the key file and may trigger the software downloading unit 305 or terminate the software download operation based on the parsing result.

The above description is directed to telecommunication apparatuses according to the embodiments of the present invention. Introduction to a method for downloading software will be made below in connection with the accompanying drawings.

FIG. 4 is a schematic flowchart of a method for software upgrade according to a third embodiment of the present invention. The method may include the following steps.

Step 401: Detect, via a preset USB driver, whether there is a storage apparatus connecting to a USB interface of a telecommunication apparatus. If such storage apparatus is detected, the process proceeds to step 402; if such storage apparatus is not detected, the process ends.

Step 402: Acquire, by the telecommunication apparatus, a software corresponding to a preset software list from the storage apparatus.

Step 403: Write the acquired software into a storage space corresponding to the preset storage address.

During the implementation of the third embodiment of the present invention, the software list and the address of the storage space have been pre-written into a program. Thus, the telecommunication apparatus in the third embodiment of the present invention may be able to realize automatic software download.

Because the software upgrade may affect the telecommunication service, in order to avoid malicious software download and the misoperation during the process of downloading software and to ensure a safe process of downloading software, the method may further include the following steps after step 401.

The telecommunication apparatus acquires a key file from the storage apparatus and parses the key file. If the parsed key file conforms with a preset key rule, the process proceeds to step 402; if the parsed key file does not conform with a preset key rule, the process ends.

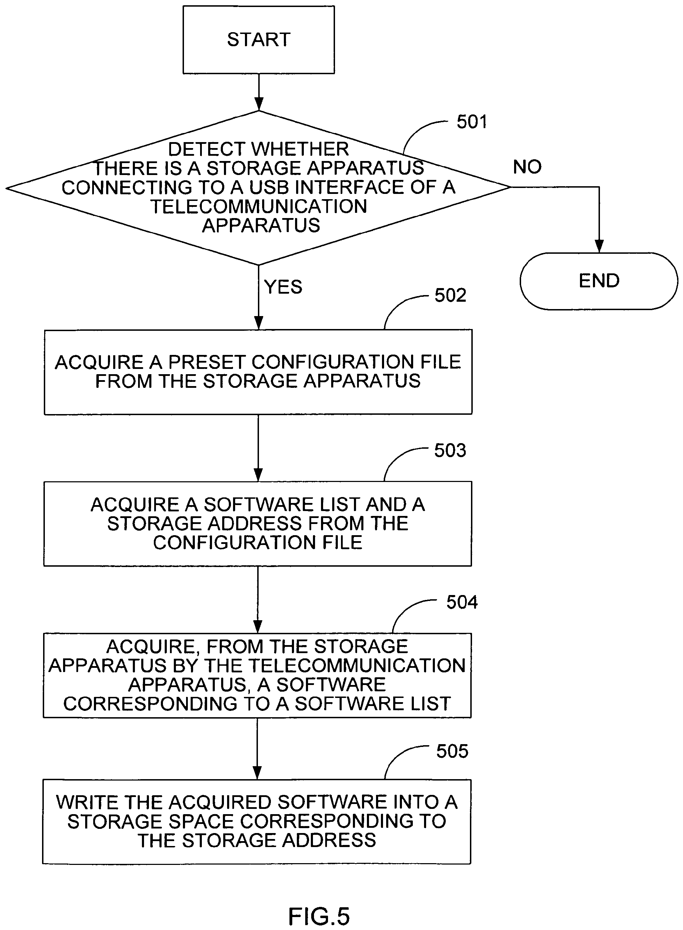

FIG. 5 is a flowchart of a method for downloading software according to a fourth embodiment of the present invention. The method may include the following steps.

Step 501: Detect, via a preset USB driver, whether there is a storage apparatus connecting to a USB interface of a telecommunication apparatus. If such storage apparatus is detected, the process proceeds to step 502; if such storage apparatus is not detected, the process ends.

Step 502: Acquire a preset configuration file from the storage apparatus.

Step 503: Acquire a software list and a storage address from the configuration file.

Step 504: Acquire a software corresponding to the software list from the storage apparatus.

Step 505: Write the acquired software into a storage space corresponding to the storage address.

During the implementation of the fourth embodiment of the present invention, the software list and the address of the storing unit are pre-written into the configuration file which is stored in the storage apparatus. When the telecommunication apparatus detects a storage apparatus, the telecommunication apparatus may first download a configuration file and then acquire the software according to the software list and the storage address recorded in the configuration file, and then store the software in a storage space corresponding to the storage address.

The method for downloading software according to the fourth embodiment of the present invention is very flexible, which allows to dynamically adjust the software download operation by modifying the configuration file.

Because it is possible that the software upgrade may affect the telecommunication service, in order to avoid malicious software download and the misoperation during the process of downloading software and to ensure a safe process of downloading software, the above method may further include the following steps where authentication is performed on the storage apparatus. Specifically, these steps may include acquiring a key file from the storage apparatus and parsing the key file to see if it conforms with a preset key rule.

The authentication step may be performed before step 502. That is, if the parsed key file conforms with a preset key rule, the process proceeds to step 502; if the parsed key file does not conform with a preset key rule, the process ends. Alternatively, the authentication step may be performed before step 504. That is, if the parsed key file conforms with a preset key rule, the process proceeds to step 504; if the parsed key file does not conform with a preset key rule, the process ends. As long as a safe software download operation is ensured, no matter where the authentication step is performed during the entire process, the implementation of the embodiments of the present invention will not be affected.

The above description relates to a method for downloading software and a telecommunication apparatus thereof according to embodiments of the present invention. After the software is downloaded to a certain storage space in the telecommunication apparatus, either a manual operation (resetting the apparatus, a monolithic board, etc.) or a software automatic upgrade can be adopted to accomplish the software upgrade. If the software automatic upgrade is adopted, the upgrade approach can be pre-written into either a program or a configuration file, which may not affect the implementation of the embodiments of the present invention.

It is appreciated by those skilled in the art that the entire or partial steps in the above embodiments can be implemented with hardware when instructed by programs. Such programs may be stored in a computer readable storage media. The program, when executed, may include detecting, via a preset USB driver, whether there is a storage apparatus connecting to a USB interface of a telecommunication apparatus; acquiring, from the detected storage apparatus by the telecommunication apparatus, a software corresponding to a preset software list; and saving the software.

The storage media mentioned above may be an ROM, a magnetic disc, or an optical disc, etc.

During the process of downloading software according to the embodiments of the present invention, because no manual networking, IP address configuration, FTP option configuration and the like are needed, the process of downloading software according to the embodiments of the present invention is simple and easy to implement. Moreover, because the storage apparatus required for the software download may be a U disc or a removable hard disc and the like, the price for the storage apparatus is much lower compared with the price for a portable device. Accordingly, the costs for software upgrade are reduced.

The above detailed description is directed to a method for downloading software and a telecommunication apparatus thereof according to the present invention. It is appreciated by a person with ordinary skill in the art that modifications may be made to the specific implementation of the embodiments and the application fields in accordance with the principle of the embodiments of the present invention. Therefore, the Specification shall not be construed as a limitation to the scope of the present invention.

## Claims

1. A telecommunication apparatus comprising a universal serial bus interface (201), a detecting unit (202), a software downloading unit (203), a storing unit (204), a key acquiring unit and a key parsing unit, wherein
the detecting unit (202) is configured to detect, via a preset universal serial bus driver, whether there is a storage apparatus connecting to the universal serial bus interface (201);
the software downloading unit (203) is configured to acquire from the storage apparatus a software corresponding to a preset software list if the detecting unit detects the storage apparatus connecting to the universal serial bus interface (201), and configured to write the software to the storing unit (204);
the software list is preset in a configuration file, wherein the telecommunication apparatus further comprises a configuration file downloading unit (303) and a configuration file parsing unit (304);
the configuration file downloading unit (303) is configured to acquire the configuration file from the storage apparatus detected by the detecting unit (202);
the configuration file parsing unit (304) is configured to acquire the preset software list from the configuration file;
the key acquiring unit is configured to acquire a key file from the storage apparatus detected by the detecting unit; and
the key parsing unit is configured to parse the key file and trigger the configuration file downloading unit or the software downloading unit if the parsed key file conforms with a preset key rule.

2. The apparatus of claim 1, **characterized in that**, one end of the universal serial bus interface is configured to connect to the storage apparatus and the other end of the universal serial bus interface is configured to connect to the detecting unit.

3. A method for downloading software comprising:
detecting (401), via a preset universal serial bus driver, whether there is a storage apparatus connecting to a universal serial bus interface of a telecommunication apparatus;
acquiring (402) a software corresponding to a preset software list from the detected storage apparatus and storing the software;
acquiring a key file from the detected storage apparatus;
wherein the software list is preset in a configuration file, wherein after detecting that there is a storage apparatus connecting to the universal serial bus interface of the telecommunication apparatus, the method further comprises:
acquiring (502) the configuration file from the storage apparatus;
acquiring (503) the preset software list from the configuration file; and
parsing the key file to determine whether the key file conforms with a preset key rule, acquiring the software if the key file conforms with the preset key rule.

## Patentansprüche

1. Telekommunikationsvorrichtung umfassend eine universelle serielle Busschnittstelle (201), einer Erfassungseinheit (202), einer Software-Downloadeinheit (203), einer Speichereinheit (204), einer Schlüsselerfassungseinheit und einer Schlüsselparsingeinheit, wobei
die Erfassungseinheit (202) zum Erfassen, über einen voreingestellten universellen seriellen Bustreiber, ausgelegt ist, ob eine Speichervorrichtung vorhanden ist, die mit der universellen seriellen Busschnittstelle (201) verbunden ist;
die Software-Downloadeinheit (203) zum Erlangen einer Software, die einer voreingestellten Softwareliste entspricht, von der Speichervorrichtung ausgelegt ist, wenn die Erfassungseinheit die Speichervorrichtung erfasst, die mit der universellen seriellen Busschnittstelle (201) verbunden ist, und zum Schreiben der Software in die Speichereinheit (204) ausgelegt ist;
die Softwareliste in einer Konfigurationsdatei voreingestellt ist, wobei die Telekommunikationsvorrichtung ferner eine Konfigurationsdatei-Downloadeinheit (303) und eine Konfigurationsdatei-Parsingeinheit umfasst;
die Konfigurationsdatei-Downloadeinheit (303) zum Erlangen der Konfigurationsdatei von der von der Erfassungseinheit (202) erfassten Speichervorrichtung ausgelegt ist;
die Konfigurationsdatei-Parsingeinheit (304) zum Erlangen der voreingestellten Softwareliste aus der Konfigurationsdatei ausgelegt ist;
die Schlüsselerlangungseinheit zum Erlangen einer Schlüsseldatei von der von der Erfassungseinheit erfassten Speichervorrichtung ausgelegt ist; und
die Schlüsselparsingeinheit zum Parsen der Schlüsseldatei ausgelegt ist und die Konfigurationsdatei-Downloadeinheit oder die Software-Downloadeinheit auslöst, wenn die geparste Schlüsseldatei mit einer voreingestellten Schlüsselregel übereinstimmt.

2. Die Vorrichtung nach Anspruch 1, **dadurch gekennzeichnet, dass** ein Ende der universellen seriellen Busschnittstelle zum Verbinden mit der Speichervorrichtung und das andere Ende der universellen seriellen Busschnittstelle zum Verbinden mit der Erfassungseinheit ausgelegt ist.

3. Verfahren zum Downloaden von Software, umfassend:
Erfassen (401) über einen voreingestellten universellen seriellen Bustreiber, ob eine mit einer universellen seriellen Busschnittstelle einer Telekommunikationsvorrichtung verbundene Speichervorrichtung vorhanden ist;
Erlangen (402) einer Software, die einer voreingestellten Softwareliste von der erfassten Speichervorrichtung entspricht, und Speichern der Software;
Erlangen einer Schlüsseldatei von der erfassten Speichervorrichtung;
wobei die Softwareliste in einer Konfigurationsdatei voreingestellt ist, wobei nach dem Erfassen, dass eine Speichervorrichtung vorhanden ist, die mit der universellen seriellen Busschnittstelle der Telekommunikationsvorrichtung verbunden ist, das Verfahren ferner umfasst:
Erlangen (502) der Konfigurationsdatei von der Speichervorrichtung;
Erlangen (503) der voreingestellten Softwareliste aus der Konfigurationsdatei; und
Parsen der Schlüsseldatei, um festzustellen, ob die Schlüsseldatei mit einer voreingestellten Schlüsselregel übereinstimmt, Erlangen der Software, wenn die Schlüsseldatei mit der voreingestellten Schlüsselregel übereinstimmt.

## Revendications

1. Appareil de télécommunication comprenant une interface de bus série universel (201), une unité de détection (202), une unité de téléchargement de logiciel (203), une unité de stockage (204), une unité d'acquisition de clé et une unité d'analyse de clé, dans lequel
l'unité de détection (202) est configurée pour détecter, par le biais d'un pilote de bus série universel prédéfini, s'il y a un appareil de stockage qui est raccordé à l'interface de bus série universel (201) ;
l'unité de téléchargement de logiciel (203) est configurée pour acquérir de l'appareil de stockage un logiciel correspondant à une liste de logiciels prédéfinie si l'unité de détection détecte que l'appareil de stockage est raccordé à l'interface de bus série universel (201) et configurée pour écrire le logiciel dans l'unité de stockage (204) ; la liste de logiciels est prédéfinie dans un fichier de configuration, dans lequel l'appareil de télécommunication comprend en outre une unité de téléchargement de fichier de configuration (303) et une unité d'analyse de fichier de configuration (304) ;
l'unité de téléchargement de fichier de configuration (303) est configurée pour acquérir le fichier de configuration à partir de l'appareil de stockage détecté par l'unité de détection (202) ;
l'unité d'analyse de fichier de configuration (304) est configurée pour acquérir la liste de logiciels prédéfinie à partir du fichier de configuration ;
l'unité d'acquisition de clé est configurée pour acquérir une clé à partir de l'appareil de stockage détecté par l'unité de détection ; et
l'unité d'analyse de clé est configurée pour analyser le fichier de clés et pour déclencher l'unité de téléchargement de fichier de configuration ou l'unité de téléchargement de logiciel si le ficher de clés analysé est conforme à une règle de clé prédéfinie.

2. Appareil selon la revendication 1, **caractérisé en ce qu'**une extrémité de l'interface de bus série universel est configurée pour être raccordée à l'appareil de stockage et l'autre extrémité de l'interface de bus série universel est configurée pour être raccordée à l'unité de détection.

3. Procédé pour télécharger un logiciel consistant :
à détecter (401), par le biais d'un pilote de bus série universel prédéfini, s'il y a un appareil de stockage qui est raccordé à une interface de bus série universel d'un appareil de télécommunication ;
à acquérir (402) un logiciel correspondant à une liste de logiciels prédéfinie à partir de l'appareil de stockage détecté et à stocker le logiciel ;
à acquérir un fichier de clés à partir de l'appareil de stockage détecté ;
dans lequel la liste de logiciels est prédéfinie dans un fichier de configuration, dans lequel, après la détection qu'il y a un appareil de stockage qui est raccordé à l'interface de bus série universel de l'appareil de télécommunication, le procédé consiste en outre :
à acquérir (502) le fichier de configuration à partir de l'appareil de stockage ;
à acquérir (503) la liste de logiciels prédéfinie à partir du fichier de configuration ; et
à analyser le fichier de clés pour déterminer si le ficher de clés est conforme à une règle de clé prédéfinie, à acquérir le logiciel si le ficher de clés est conforme à la règle de clé prédéfinie.
